# FASCICULE DE BREVET EUROPEEN

(11) **EP 1 205 749 B1**
(45) Date de publication et mention de la délivrance du brevet: **04.12.2013**
(21) Numéro de dépôt: 01402600.9
(22) Date de dépôt: 09.10.2001
(51) Int. Cl.: G01N 29/26

(54) **Contrôle acoustique de roues aubagées monoblocs**
Akustischer Test von Monoblockturbinenrädern
Acoustic testing of monobloc turbine wheels

(30) Priorité: 10.10.2000 FR 0012926
(43) Date de publication de la demande: 15.05.2002
(73) Titulaire: SNECMA, 75015 Paris (FR)
(72) Inventeur: Naudet, Jacky S., 91070 Bondoufle (FR); Mary, Jean-Luc A., 77830 Pamfou (FR); Collot, André C., 91540 Mennecy (FR); Berthillier, Marc J., 91330 Yerres (FR)
(74) Mandataire: David, Alain

(56) Documents cités:
- EP-A1- 0 490 187
- WO-A1-00/39574
- JP-A- 59 034 146
- US-A- 4 052 889
- US-A- 4 213 183
- US-A- 4 998 005

## Description

### Domaine de l'invention

La présente invention se rapporte au domaine du contrôle de l'usinage des pièces mécaniques et elle concerne plus particulièrement le contrôle fréquentiel de roues aubagées monoblocs par signature vibro-acoustique.

### Art antérieur

Jusqu'à récemment, la partie tournante, ou rotor, du compresseur dans un turboréacteur ou un turbopropulseur (appelé dans la suite de la description turbomachine), était formée par l'assemblage de plusieurs roues, sous forme de disques ou d'anneaux, sur chacune desquelles étaient rapportées des aubes, appelées aussi pales. Ce montage individuel des aubes avait pour conséquence de créer un amortissement des phénomènes vibratoires qui, en pratique, excluait toute destruction par résonance de la roue sur laquelle elles étaient montées.

Aujourd'hui, les roues de compresseur et aussi de ventilateurs industriels (appelés aussi fan) sont de plus en plus souvent réalisées de façon monobloc, les aubes faisant partie intégrante du disque ou de l'anneau support. En effet, ce type de structure permet de minimiser la taille et le poids de la roue et donc également celui du compresseur dans son ensemble, ce qui a une influence bénéfique sur la masse globale de la turbomachine qui l'incorpore.

Dans JP 59034146, un procédé et un dispositif pour contrôle acoustique d'une roue aubagée est décrit.

Or, les moyens modernes d'usinage automatique permettent actuellement une très grande précision et une très grande répétabilité dans la fabrication des aubes, ce qui a pour conséquence inattendue, du fait de la quasi-parfaite géométrie obtenue, de provoquer des phénomènes vibratoires résonants très importants pouvant dans des cas extrêmes entraîner une destruction complète de la roue.

### Objet et définition de l'invention

La présente invention a pour objet un procédé et un dispositif correspondant de contrôle acoustique de roues aubagées monoblocs qui permette de déterminer ce risque de résonance afin d'éviter la destruction potentielle de la roue. Un but de l'invention est aussi de proposer un procédé de contrôle particulièrement rapide dont la mise en oeuvre peut s'effectuer en temps réel. Un autre but de l'invention est de proposer un procédé de contrôle qui puisse faire partie intégrante du processus d'usinage. Encore un but de l'invention est de proposer un procédé qui permette en outre un contrôle de la qualité de l'usinage. Encore un autre but de l'invention est de proposer un procédé qui puisse également déterminer le type de défauts affectant les aubes reconnues défectueuses.

Ces buts sont atteints par un procédé de contrôle acoustique d'une roue aubagée monobloc dans lequel on entraîne en rotation cette roue ; on soumet chaque aube de la roue à une excitation mécanique, on recueille sa réponse acoustique et on génère un signal électrique correspondant ; on détermine par un calcul de FFT (Fast Fourrier Transform) sa réponse fréquentielle ; on mémorise le signal électrique et la réponse fréquentielle associée; on identifie les fréquences caractéristiques de chaque aube de la roue ; et on rejete ou on accepte la roue selon que la répartition des fréquences ainsi obtenue est identique ou non à un ensemble prédéterminé de répartition de fréquences interdites.

Avec ce procédé particulier, on peut sans erreur et très rapidement écarter une roue non conforme. En outre, ce procédé peut s'intégrer sans difficulté à un processus conventionnel d'usinage.

De préférence, ce procédé comporte en outre une étape supplémentaire de détermination des défauts d'une aube à partir de la comparaison de sa réponse fréquentielle par rapport à des réponses fréquentielles prédéterminées caractéristiques de défauts types.

L'invention concerne également le dispositif mettant en oeuvre le procédé précité. Avantageusement, les moyens d'excitation mécanique de ce dispositif comportent un moyen d'excitation par percussion ou par lâcher de marteau et les moyens de réception acoustique comportent un microphone.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique générale illustrant le dispositif de contrôle acoustique de roues aubagées monoblocs selon l'invention, et
- la figure 2 est un graphique montrant un exemple de courbes de réponse en fréquence obtenues à partir du dispositif de la figure 1.

### Description détaillée d'un mode de réalisation préférentiel

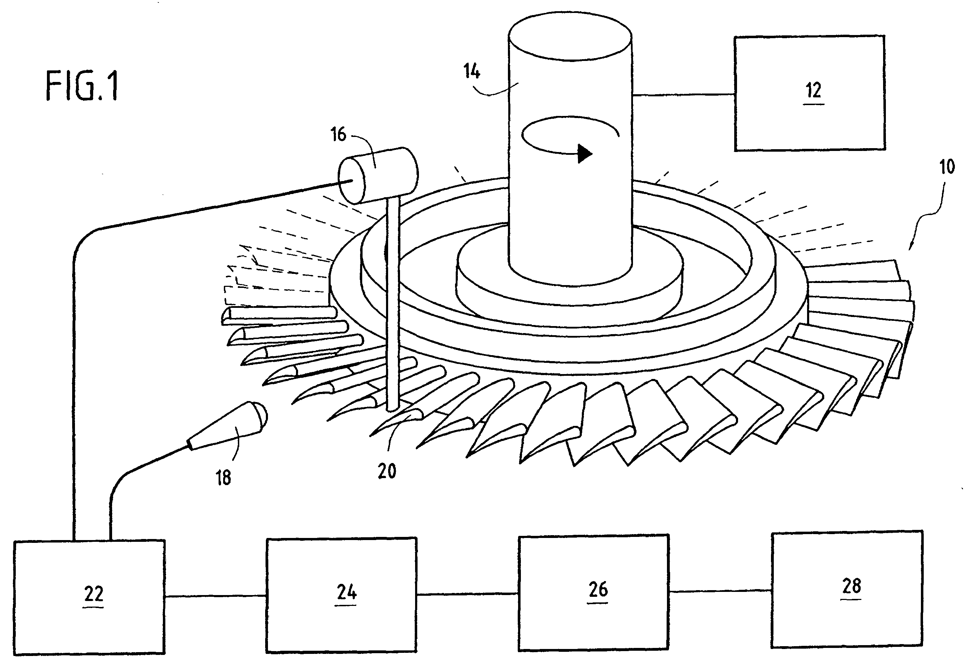

Le dispositif de contrôle acoustique de roues aubagées monoblocs selon l'invention est illustré très schématiquement à la figure 1. Il comporte : un moyen d'entraînement en rotation de la roue 10 constitué par exemple par un moteur électrique 12 agissant sur un moyeu 14 sur lequel est fixée la roue à contrôler (un système d'indexage, non représenté, étant en outre prévu pour repérer chacune des aubes de la roue) ; un moyen d'excitation mécanique 16, constitué par exemple par un dispositif à percussion ou par lâcher de marteau (doigt ou lamelle métallique par exemple), et placé au dessus d'une aube 20 de la roue ; un moyen de réception acoustique 18 constitué par exemple par un microphone placé à proximité de l'aube excitée ; et des moyens de traitement 22-28 reliés à la fois au moyen d'excitation mécanique et au moyen de réception acoustique pour d'une part commander le moyen d'excitation mécanique 16 et d'autre part traiter les signaux acoustiques recueillis aux bornes du moyen de réception acoustique 18. Classiquement, pour chaque aube de la roue, le traitement des signaux acoustiques est synchronisé sur les signaux d'excitation correspondants.

Les moyens de traitement comportent des moyens 22 de transformation des signaux acoustiques recueillis en signaux électriques. La transformation des signaux acoustiques s'accompagne classiquement d'un filtrage sur une bande de fréquence déterminée et compatible avec la roue à contrôler. Ces signaux sont ensuite soumis à une analyse FFT (Fast Fourrier Transform) pour en tirer une réponse fréquentielle de l'aube correspondante. Les signaux électriques analysés (après échantillonnage) ainsi que les différents échantillons de la réponse en fréquence en résultant sont emmagasinés dans des moyens de stockage 24, par exemple dans une mémoire numérique, pour chaque aube de la roue à contrôler. On notera que la détermination de la réponse fréquentielle de chaque aube ainsi que sa mémorisation correspondante dans les moyens de stockage peut être effectuée non pas entre chaque aube mais une fois recueillis les signaux acoustiques de toutes les aubes de la roue à contrôler.

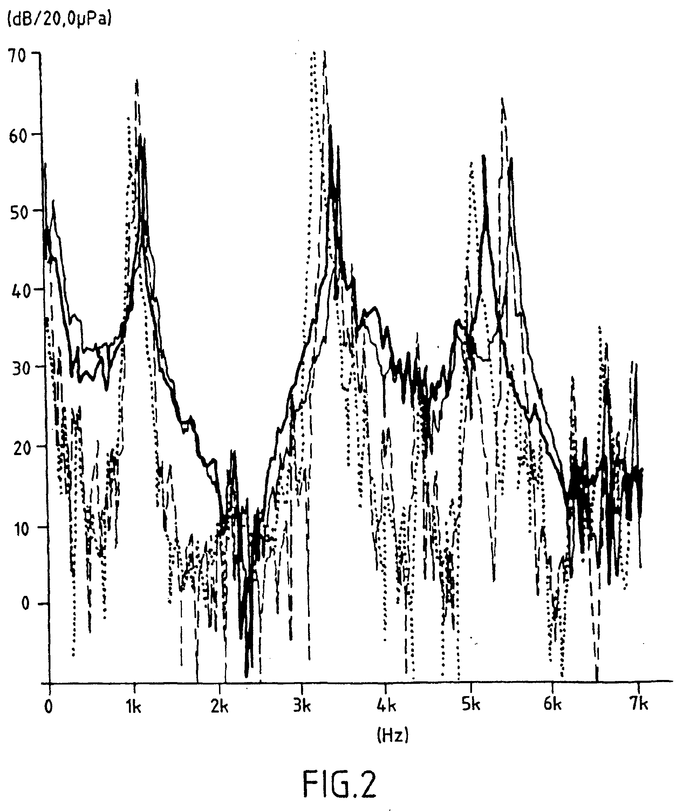

La figure 2 montre un exemple des réponses fréquentielles obtenues pour quatre aubes successives d'une roue aubagée monobloc de compresseur d'une turbomachine et qui constituent en quelque sorte leur signature acoustique. On peut noter, sur l'exemple illustré, la présence pour chaque aube de trois fréquences particulières F1, F2, F3 caractéristiques de la géométrie de l'aube étudiée. La mesure a été effectuée dans une gamme de fréquence de 0 à 7000 Hertz avec une résolution fréquentielle de 8 Hertz.

Un traitement effectué sur les réponses en fréquence de chacune des aubes de la roue à contrôler par des moyens d'identification 26 permet ensuite de déterminer les fréquences caractéristiques de chaque aube parmi les différentes fréquences fournies par les réponses fréquentielles précédentes et d'aboutir alors au tableau suivant :

| Numéro d'aube | Fréquence F1 | Fréquence F2 | Fréquence F3 |
|---|---|---|---|
| 1 | F1¹ | F2¹ | F3¹ |
| 2 | F1² | F2² | F3² |
| | | | |
| i | F1^{l} | F2^{l} | F3^{l} |
| | | | |
| n | F1ⁿ | F2ⁿ | F3ⁿ |

Ce tableau permet de bien appréhender la dispersion des fréquences caractéristiques des aubes pour une roue donnée. Le rejet ou l'acceptation de la roue est déterminé ensuite très simplement par des moyens de classification 28 en comparant dans le tableau obtenu la répartition de ces fréquences caractéristiques avec un ensemble prédéterminé de répartitions fréquentielles interdites, car correspondant à des configurations inacceptables au niveau vibratoire et déterminé lors de la conception de la roue. L'identité des répartitions entraînera un rejet de la roue contrôlée.

Le procédé de contrôle acoustique des phénomènes vibratoires pouvant entraîner la destruction par résonnance d'une roue aubagée monobloc selon l'invention peut donc ainsi se résumer aux étapes suivantes :
a) entraîner en rotation la roue,
b) soumettre une première aube à une excitation mécanique,
c) recueillir une réponse acoustique et générer un signal électrique correspondant,
d) déterminer par un calcul de FFT la réponse fréquentielle de ladite première aube de la roue,
e) mémoriser le signal électrique et sa réponse fréquentielle associée,
f) répéter les étapes b) à e) pour chaque aube de la roue,
g) identifier des fréquences caractéristiques de chaque aube de la roue à partir de leur réponses fréquentielles mémorisées, et
h) rejeter ou accepter la roue selon que la répartition des fréquences ainsi obtenues est identique ou non avec un ensemble prédéterminé de répartitions de fréquences interdites correspondant auxdits phénoménes vibratoires pouvant entraîner la destruction par résonnance de ladite roue aubagée.

Ce procédé est particulièrement efficient et permet de décider très rapidement (l'analyse complète d'une aube de la roue peut être faite en moins de 2 secondes) et pratiquement sans erreur, de l'utilité de poursuivre le processus de fabrication. En effet, la fabrication d'une roue aubagée monobloc comporte en général trois opérations successives, un fraisage, un polissage et un grenaillage, et en effectuant le contrôle dès l'issu de l'étape de fraisage (directement sur la machine avant démontage ou sur un poste proche), il est possible d'éviter les deux étapes suivantes en cas de contrôle négatif révélant une roue non conforme. Il permet aussi d'éviter de poursuivre le processus d'usinage sur les roues suivantes avec les mêmes défauts ou d'attendre, comme actuellement, un contrôle géométrique ultérieur. Notons également que la rapidité du contrôle permet même d'effectuer celui-ci en temps masqué par rapport à l'opération d'usinage de la roue suivante. Dans ce cas, le moyen de mise en rotation sera bien entendu directement celui servant à l'entraînement de la machine d'usinage.

En outre, les différents essais menés par les inventeurs ont permis de montrer que les différentes variations sur le spectre fréquentiel de chaque aube par rapport à une aube théorique de référence résultaient de défauts de géométrie ou de structure de l'aube. Ainsi, un défaut géométrique non visible à l'oeil (sur-épaisseur de seulement 10 microns par exemple) ressort avec un spectre de fréquence présentant des modes décalés par rapport à cette aube théorique. Dès lors, il devient possible de répertorier certaines classes de défauts types (aube tronquée, sur-épaisseur en pied d'aube, déformation locale, criques, etc.) présentant une même réponse acoustique (donc un même spectre de fréquence).

Ainsi, le procédé de l'invention peut non seulement écarter sans erreur une roue susceptible de présenter des caractéristiques de résonance dangereuse mais, pour ces roues rejetées, elle peut également déterminer la nature des défauts significatifs qui les affectent pour éventuellement y remédier (une sur-épaisseur pourra par exemple être éliminée par un nouvel usinage local) et aboutir alors à une pièce conforme en comparant sa réponse fréquentielle par rapport à des réponses fréquentielles prédéterminées caractéristiques de ces défauts types.

## Revendications

1. Procédé de contrôle acoustique des phénomènes vibratoires résonants pouvant entrainer la destruction par résonance d'une roue aubagée monobloc, **caractérisé en ce qu'**il comporte les étapes suivantes :
a) entraîner en rotation ladite roue,
b) soumettre une première aube à une excitation mécanique,
c) recueillir une réponse acoustique et générer un signal électrique correspondant,
d) déterminer par un calcul de FFT la réponse fréquentielle de ladite première aube de la roue,
e) mémoriser le signal électrique et la réponse fréquentielle associée,
f) répéter les étapes b) à e) pour chaque aube de la roue,
g) identifier des fréquences caractéristiques de chaque aube de la roue à partir de leur réponses fréquentielles mémorisées, et
h) rejeter ou accepter la roue selon que la répartition des fréquences ainsi obtenues est identique ou non à un ensemble prédéterminé de répartitions de fréquences interdites correspondant auxdits phénomènes vibratoires résonants pouvant entrainer la destruction par résonance de ladite roue aubagée monobloc.

2. Procédé de contrôle acoustique selon la revendication 1, **caractérisé en ce que** lesdites étapes de détermination de la réponse fréquentielle et de mémorisation correspondante sont effectuées une fois recueillis tous les signaux électriques de la roue.

3. Procédé de contrôle acoustique selon la revendication 1, **caractérisé en ce que** ladite excitation mécanique consiste en une excitation par impact ou par lâcher de marteau.

4. Procédé de contrôle acoustique selon la revendication 1, **caractérisé en ce qu'**il comporte en outre une étape de détermination des défauts d'une aube à partir de la comparaison de sa réponse fréquentielle par rapport à des réponses fréquentielles prédéterminées caractéristiques de défauts types.

5. Procédé d'usinage automatique d'une roue aubagée monobloc dams lequel ladite roue aubagée monobloc est soumise successivement à des opérations de fraisage, de polissage et de grenaillage, **caractérisé en ce qu'**il comporte en outre un contrôle acoustique des phénomènes vibratoires résonants pouvant entraîner la destruction par résonance d'une roue aubagée monobloc selon l'une quelconque des revendications 1 a 4.

6. Procédé d'usinage automatique selon la revendication 5, **caractérisé en ce que** ledit contrôle acoustique des phénomènes vibratoires résonants d'une roue aubagée monobloc donnée est effectué à l'issue de ladite opération de fraisage en temps masqué par rapport à l'usinage de la roue suivante.

7. Dispositif adapté pour la mise en oeuvre du procédé selon la revendication 1 de contrôle acoustique des phénomènes vibratoires résonants pouvant entrainer la destruction par résonance d'une roue aubagée monobloc, **caractérisé en ce qu'**il comporte :
a) des moyens d'entraînement (12) pour entraîner en rotation ladite roue (10),
b) des moyens d'excitation mécanique (16) pour soumettre chacune des aubes (20) de la roue à une excitation mécanique,
c) des moyens de réception acoustique (18) pour recueillir une réponse acoustique et générer un signal électrique correspondant,
d) des moyens de calcul (22) pour déterminer par un calcul de FFT les réponses fréquentielles de chaque aube de la roue,
e) des moyens de stockage (24) pour mémoriser les signaux électriques et les réponses fréquentielles associées,
f) des moyens d'identification (26) pour identifier des fréquences caractéristiques de chaque aube de la roue à partir de leurs réponses fréquentielles mémorisées, et
g) des moyens de classification (28) pour rejeter ou accepter la roue selon que la répartition des fréquences ainsi obtenues est identique ou non à un ensemble prédéterminé de répartitions de fréquences interdites correspondant auxdits phénomènes vibratoires résonants pouvant entrainer la destruction par résonance de ladite roue aubagée monobloc.

8. Dispositif de contrôle acoustique selon la revendication 7, **caractérisé en ce que** lesdits moyens d'excitation mécanique comportent un moyen d'excitation par percussion ou par lâcher de marteau.

9. Dispositif de contrôle acoustique selon la revendication 7, **caractérisé en ce que** lesdits moyens de réception acoustique comportent un microphone.

## Patentansprüche

1. Verfahren zur akustischen Prüfung der Resonanzschwingungsphänomene, die zur Zerstörung eines einteilig ausgebildeten Schaufelrades durch Resonanz führen können, **dadurch gekennzeichnet, dass** es die folgenden Schritte umfasst:
a) das Rad drehantreiben,
b) eine erste Schaufel einer mechanischen Erregung aussetzen,
c) eine akustische Antwort aufnehmen und ein entsprechendes elektrisches Signal erzeugen,
d) durch eine FFT-Berechnung die Frequenzantwort der ersten Schaufel des Rades bestimmen,
e) das elektrische Signal und die zugeordnete Frequenzantwort speichern,
f) die Schritte b) bis e) für jede Schaufel des Rades wiederholen,
g) charakteristische Frequenzen einer jeden Schaufel des Rades anhand ihrer gespeicherten Frequenzantworten identifizieren, und
h) das Rad verwerfen oder annehmen, je nachdem, ob die Verteilung der so erhaltenen Frequenzen mit einer vorbestimmten Einheit untersagter Frequenzverteilungen, die den Resonanzschwingungsphänomenen entsprechen, welche zur Zerstörung des einteilig ausgebildeten Schaufelrades durch Resonanz führen können, identisch ist oder nicht.

2. Akustisches Prüfverfahren nach Anspruch 1, **dadurch gekennzeichnet, dass** die Schritte des Bestimmens der Frequenzantwort und des entsprechenden Speicherns durchgeführt werden, sobald alle elektrischen Signale des Rades aufgenommen sind.

3. Akustisches Prüfverfahren nach Anspruch 1, **dadurch gekennzeichnet, dass** die mechanische Erregung in einer Erregung durch Aufprall oder durch Loslassen eines Hammers besteht.

4. Akustisches Prüfverfahren nach Anspruch 1, **dadurch gekennzeichnet, dass** es ferner einen Schritt zum Bestimmen der Fehler einer Schaufel anhand des Vergleichs ihrer Frequenzantwort mit vorbestimmten Frequenzantworten, die für Standardfehler charakteristisch sind, umfasst.

5. Verfahren zur automatischen Bearbeitung eines einteilig ausgebildeten Schaufelrades, wobei das einteilig ausgebildete Schaufelrad nacheinander Fräs-, Polier- und Strahlvorgängen unterzogen wird, **dadurch gekennzeichnet, dass** es ferner eine akustische Prüfung der Resonanzschwingungsphänomene, die zur Zerstörung eines einteilig ausgebildeten Schaufelrades durch Resonanz führen können, nach einem der Ansprüche 1 bis 4 umfasst.

6. Automatisches Bearbeitungsverfahren nach Anspruch 5, **dadurch gekennzeichnet, dass** die akustische Prüfung der Resonanzschwingungsphänomene eines gegebenen einteilig ausgebildeten Schaufelrades am Ende des Fräsvorgangs zeitgleich zu der Bearbeitung des folgenden Rades durchgeführt wird.

7. Vorrichtung, geeignet für die Durchführung des Verfahrens nach Anspruch 1, zur akustischen Prüfung der Resonanzschwingungsphänomene, die zur Zerstörung eines einteilig ausgebildeten Schaufelrades durch Resonanz führen können, **dadurch gekennzeichnet, dass** sie umfasst:
a) Antriebsmittel (12) zum Drehantreiben des Rades (10),
b) Mittel zur mechanischen Erregung (16), um jede der Schaufeln (20) des Rades einer mechanischen Erregung auszusetzen,
c) Mittel für den akustischen Empfang (18), um eine akustische Antwort aufzunehmen und ein entsprechendes elektrisches Signal zu erzeugen,
d) Berechnungsmittel (22), um durch eine FFT-Berechnung die Frequenzantworten einer jeden Schaufel des Rades zu bestimmen,
e) Speichermittel (24), um die elektrischen Signale und die zugeordneten Frequenzantworten zu speichern,
f) Identifikationsmittel (26), um charakteristische Frequenzen einer jeden Schaufel des Rades anhand ihrer gespeicherten Frequenzantworten zu identifizieren, und
g) Klassifikationsmittel (28), um das Rad zu verwerfen oder anzunehmen, je nachdem, ob die Verteilung der so erhaltenen Frequenzen mit einer vorbestimmten Einheit untersagter Frequenzverteilungen, die den Resonanzschwingungsphänomenen entsprechen, welche zur Zerstörung des einteilig ausgebildeten Schaufelrades durch Resonanz führen können, identisch ist oder nicht.

8. Akustische Prüfvorrichtung nach Anspruch 7, **dadurch gekennzeichnet, dass** die Mittel zur mechanischen Erregung ein Mittel zur Erregung durch Schlag oder durch Loslassen eines Hammers umfassen.

9. Akustische Prüfvorrichtung nach Anspruch 7, **dadurch gekennzeichnet, dass** die Mittel für den akustischen Empfang ein Mikrofon umfassen.

## Claims

1. A method of acoustically inspecting resonant vibratory phenomena able to destroy by resonance a one-piece bladed wheel, **characterized in that** it comprises the following steps:
a) driving the wheel in rotation;
b) subjecting a first blade to mechanical excitation;
c) picking up an acoustic response and generating a corresponding electrical signal;
d) performing an FFT computation to determine the frequency response of said first blade of the wheel;
e) storing the electrical signal and the associated frequency response;
f) repeating steps b) to e) for each blade of the wheel;
g) identifying characteristic frequencies of each blade of the wheel from the stored frequency responses; and
h) rejecting or accepting a wheel depending on whether the resulting frequency distribution matches a predetermined set of forbidden frequency distributions corresponding with said resonant vibratory phenomena able to destroy by resonance said one-piece bladed wheel.

2. An acoustic inspection method according to claim 1, **characterized in that** said steps for determining the frequency response and storing it are performed after all of the electrical signals have been picked up from the wheel.

3. An acoustic inspection method according to claim 1, **characterized in that** said mechanical excitation consists in excitation by impact or by releasing a hammer.

4. An acoustic inspection method according to claim 1, **characterized in that** it further comprises a step of determining defects in a blade by comparing its frequency response with predetermined frequency responses characteristic of various types of defect.

5. An automatic machining method of a one-piece bladed wheel in which said one-piece bladed wheel successively comprises operations of milling, polishing and shot blasting, **characterized in that** it further comprises an acoustic inspection of resonant vibratory phenomena able to destroy by resonance a one-piece bladed wheel according to any one of claims 1 to 4.

6. An automatic machining method according to claim 5, **characterized in that** said acoustic inspection of resonant vibratory phenomena of a determined one-piece bladed wheel is performed at the end of the step of milling in hidden time relative to the operation of machining the next wheel.

7. Apparatus adapted for working the acoustic inspection method of claim 1 for acoustically inspecting resonant vibratory phenomena able to destroy by resonance a one-piece bladed wheel, **characterized in that** it comprises:
a) drive means (12) for rotating said wheel (10);
b) mechanical excitation means (16) for subjecting each of the blades (20) of the wheel to mechanical excitation;
c) acoustic receiver means (18) for picking up an acoustic response and for generating a corresponding electrical signal;
d) computation means (22) for computing the frequency responses of each blade of the wheel by means of an FFT;
e) storage means (24) for storing the electrical signals and the associated frequency responses;
f) identification means (26) for identifying characteristic frequencies of each blade of the wheel on the basis of their stored frequency responses; and
g) classifier means (28) for rejecting or accepting a wheel depending on whether or not the resulting frequency distribution matches a predetermined set of forbidden frequency distributions corresponding with said resonant vibratory phenomena able to destroy by resonance a one-piece bladed wheel.

8. Acoustic inspection apparatus according to claim 7, **characterized in that** said mechanical excitation means comprise means for excitation by percussion or by releasing a hammer.

9. Acoustic inspection apparatus according to claim 7, **characterized in that** said acoustic receiver means comprise a microphone.
